# EUROPÄISCHE PATENTSCHRIFT

(11) **EP 3 041 765 B1**
(45) Veröffentlichungstag und Bekanntmachung des Hinweises auf die Patenterteilung: **12.09.2018**
(21) Anmeldenummer: 14739112.2
(22) Anmeldetag: 09.07.2014
(51) Int. Cl.: B65G 15/36, B29D 29/06, D07B 1/06, D07B 1/16

(54) **FÖRDERGURT MIT EINEM ZUGTRÄGER AUS SEILEN**
CONVEYOR BELT HAVING A TENSILE MEMBER COMPRISING CABLES
BANDE DE CONVOYEUR COMPRENANT UNE CARCASSE EN CÂBLES

(30) Priorität: 06.09.2013 DE 102013109770; 27.02.2014 DE 102014203595
(43) Veröffentlichungstag der Anmeldung: 13.07.2016
(73) Patentinhaber: ContiTech Transportbandsysteme GmbH, 30165 Hannover (DE)
(72) Erfinder: LOTZ, Florian, 37647 Brevörde (DE); DREIER, Marius, 37191 Katlenburg (DE); SICKMÜLLER, Uwe, 07407 Uhlstedt-Kirch. (DE)
(74) Vertreter: Preusser, Andrea
(86) Internationale Anmeldenummer: PCT/EP2014/064665
(87) Internationale Veröffentlichungsnummer: WO 2015/032528

(56) Entgegenhaltungen:
- GB-A- 1 089 766
- GB-A- 2 026 940
- US-A- 3 998 986

## Beschreibung

Die Erfindung betrifft einen Fördergurt mit einer tragseitigen und laufseitigen Deckplatte nach dem Oberbegriff des Anspruchs 1. Fördergurte besitzen wenigstens eine zugkraftübertragende Karkasse aus Textil- und / oder Stahlseileinlagen, die in der Regel von wenigstens einer Haftgummimischung umgeben sind. Die Karkassen sind allseitig von verschleißfesten Gummideckplatten und einem Gummikantenschutz umgeben. Zusätzlich können bei Bedarf noch diverse Durchschlagsschutzeinrichtungen vorhanden sein.

Fördergurte bei denen die Karkasse im Wesentlichen aus Stahlseilen besteht, werden als Stahlseilfördergurte bezeichnet. Stahlseilfördergurte ermöglichen hervorragende Transportleistungen auch bei harter Beanspruchung. Ihre robuste Konstruktion garantiert sowohl eine hohe Bruchkraft bei stärkster Förderleistung, als auch eine gute Beaufschlagungsfestigkeit. Sie sind in der Regel besonders abriebfest, verrottungs- und korrosionsbeständig, chemisch resistent und thermisch stabil, so dass eine lange Lebensdauer bei niedrigem Wartungsbedarf gewährleistet ist.

Im Stahlseilfördergurt sind die Stahlseile meist als Lage in einer Ebene zwischen den Deckplatten angeordnet. Die Stahlseile sind aus Gründen der Haftung und des Korrosionsschutzes häufig verzinkt, besitzen zumeist einen Durchmesser von 2,8 bis 16,0 mm und können aus ca. 40 bis zu 250 Einzeldrähten bestehen
Zur Verbesserung der Haftung werden häufig zusätzlich noch Haftmischungen, auch als Haftgummimischungen bezeichnet, verwendet, die neben der Optimierung der Haftung als solche auch während des Vulkanisationsprozesses in die Stahlseile hineinfließen sollen um eine bessere Abdichtung zu ermöglichen. Das vollständige Durchdringen des gesamten Seils, die auch als Durchgummierung bezeichnet wird, ist essentiell für die Lebensdauer des Stahlseils und somit auch für den gesamten Fördergurt. Findet keine vollständige Durchgummierung statt, so verbleiben Hohlräume in der Seilkonstruktion offen, wodurch bspw. Flüssigkeiten wie Wasser, Öle, etc. im Seil wandern können und es zu fortschreitenden Oxidationsprozessen, insbesondere zu Korrosion, unter zunehmender Alterung und einem Frühausfall des gesamten Fördergurtes kommen kann. Die vollständige Durchdringung der gesamten Seilkonstruktion ist umso schwerer, je größer der Seildurchmesser ist. Bei "geschlossenen" Seilkonstruktionen, welche auch als parallelschlag- oder gleichschlag-Konstruktion bezeichnet werden, ist sie auch bei geringeren Durchmessern kaum zu erreichen.

Das Dokument GB 2026940 A offenbart einen Fördergurt nach dem Oberbegriff des Anspruchs 1.

Die Aufgabe der Erfindung besteht daher darin, eine vollständige Durchgummierung des Seils zu gewährleisten, so dass die Anzahl von offenen Hohlräumen deutlich reduziert wird und somit ein Transport bzw. eine Wanderung von Flüssigkeiten in die Seilkonstruktion und vor allem innerhalb der Seilkonstruktion verhindert werden kann. Diese Aufgabe wird mit dem Fördergurt nach Anspruch 1 gelöst. Die Porenstruktur ist hierbei bevorzugt abdichtend, d.h. die Ausdehnung der Porenstruktur ist derart gestaltet, dass in den Hohlräumen jeweils eine abdichtende Porenstruktur vorliegt.

Die Begriffe expansionsfähig und expandierbar werden in diesem Zusammenhang synonym verwendet.

Expansionsfähig bedeutet, dass die Beschichtung während der Vulkanisation eine Volumenzunahme erfährt, welche über die bei der Vulkanisation üblicherweise vorhandene Volumenzunahme hinausgeht. Das Volumen der Beschichtung ist nach der Vulkanisation bevorzugt 30 bis 5000%, ganz besonders bevorzugt 200 bis 1000%, höher als vor der Vulkanisation. Die Volumenzunahme wurde hierbei unter Normalbedingungen, d.h. unter natürlichen Bedingungen, ohne zusätzliche Druckbeaufschlagung, d.h. drucklos, bestimmt.

"Im Wesentlichen aus Stahl aufgebaut" bedeutet, dass wenigstens 50 Vol.-% des Seils aus Stahl bestehen müssen, es aber auch möglich ist, dass es sich um ein Hybridseil aus Stahl und wenigstens einem weiteren Material handelt. Ein derartiges Hybridseil zum Beispiel aus Stahl und Aramid ist in WO 2012/079820 A1 beschrieben.

Ist ein Seil vollständig oder teilweise mit einer derartigen expansionsfähigen Beschichtung versehen, so verläuft der Aufheizvorgang während der Vulkanisation von außen, d.h. von der Kautschukseite, nach innen, d.h. zum Seil hin. Somit wird erst die außerhalb des beschichteten Seils liegende Haftmischung fließfähig und dringt, insbesondere durch den Pressendruck, bis zu einem gewissen Grad in das Seil ein. Dieser Vorgang wird als äußere Seildurchdringung bezeichnet. Sie erlaubt jedoch nur die Durchgummierung von kleineren Seildurchmessern bis etwa 10mm in einer offenen Seilkonstruktion.

Zeitverzögert reagiert nun die expansionsfähige Beschichtung, was als Seildurchdringung von innen heraus zu sehen ist. Die expansionsfähige Beschichtung expandiert, d.h. sie bläht auf, füllt somit die verbleibenden inneren Hohlräume aus und haftet bzw. verklebt an den Seiloberflächen der Drähte. Hierbei ist es insbesondere relevant, dass erst das Aufblähen und dann zeitlich versetzt die Aushärtung, z.B. durch Vulkanisation, erfolgt. Hierdurch entsteht eine Porenstruktur, welche auch als Wabensystem aus elastischen Hohlkammern bezeichnet werden kann, wodurch Flüssigkeiten und andere Kontaminationen nicht mehr im Seil wandern können. Ein optimaler Korrosionsschutz wird somit erreicht. Erfindungsgemäß ist die tragseitige und laufseitige Deckplatte aus jeweils mindestens einem polymeren Werkstoff mit elastischen Eigenschaften aufgebaut. Hierbei kann es sich um Kautschuke, aber auch um thermoplastische Elastomere, wie bspw. Polyurethan, handeln. Bei dem polymeren Werkstoff handelt es sich bevorzugt um einen Kautschuk, der ausgewählt ist aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR, HNBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM).

Die genannten Kautschuke können hierbei alleine oder im Verschnitt eingesetzt werden. Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau. Im Übertagebergbau haben ferner NR sowie die oben erwähnten Verschnitte (DE 10 2009 043 904 A1) eine größere Bedeutung erlangt.

Die Deckplatten können auch als Folie oder Gewebe ausgebildet sein, wobei hierbei die genannten Werkstoffe ebenso zum Einsatz kommen. Besonders bevorzugt ist es, wenn die Folie auf der Basis wenigstens eines Fluorpolymers aufgebaut ist. In diesem Fall ist eine zusätzliche optimierte Medienbeständigkeit gewährleistet.

Des weiteren können die beiden Deckplatten neben der Kautschukkomponente wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente) enthalten.

In die tragseitige und/oder laufseitige Deckplatte können zudem noch folgende Bauteile eingebettet sein: Leiterschleifen, Transponder, Barcodes, eine Polymermatrix mit eingemischten detektierbaren Teilchen oder andere detektierbare Elemente.

Der Fördergurt kann noch mit einem Aufbauteil, beispielsweise mit einem Mitnehmerteil, Führungsteil sowie mit Rand- und Seitenwandprofilen versehen sein. Derartige Aufbauteile bestehen aus einem polymeren Werkstoff (Kautschuk, Thermoplastisches Elastomer, Thermoplast) und werden fußseitig mit der tragseitigen Oberfläche des elastischen Fördergurtes verklebt und / oder vulkanisiert.

Bei Stahlseilfördergurten, wie auch bei Fördergurten mit textilen Zugträgern, wird zwecks Schlitzschutz zusätzlich eine in der tragseitigen und/oder laufseitigen Deckplatte eingebettete Querarmierung aus Synthesecorden, beispielsweise aus Polyamid (PA), oder dünnen Stahlcorden verwendet, siehe u.a. WO 2008/034483 A1.

Wie bereits eingangs erwähnt, enthält der Fördergurt bevorzugt zusätzlich noch wenigstens eine Haftgummimischung, die die Haftung zwischen den Deckplatten und den Seilen gewährleisten soll. Diese Haftgummimischung wird häufig auch als Haftmischung, Kernmischung oder Skimmmischung bezeichnet. Die Haftmischung ist bevorzugt auf der Basis wenigstens eines Elastomers aufgebaut. Bei dem Elastomer kann es sich um Kautschuke, aber auch um thermoplastische Elastomere, wie bspw. Polyurethan, handeln. Es handelt sich bevorzugt allerdings um einen Kautschuk, der ausgewählt ist aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR, HNBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM). Die genannten Kautschuke können hierbei alleine oder im Verschnitt eingesetzt werden. Besonders gut geeignet sind als Haftmischung Mischungen auf der Basis von SBR und / oder NR und / oder BR. Die Haftmischungen enthalten zumeist noch wenigstens einen Weichmacher und / oder wenigstens ein Lösungsmittel, über die in der Regel die Viskosität und / oder die Haftung bzw. die Klebrigkeit der Haftmischung eingestellt werden kann.

In der Literatur wird häufig zwischen Fördergurten und Transportbändern unterschieden. Fördergurte werden in der Regel für Schüttgut (wie bspw. Kohle, Erze, Sand, Zement usw.) eingesetzt, während Transportbänder üblicherweise für Stückgut (Pakete usw.) benutzt werden. Fördergurte sind im Allgemeinen länger, breiter, dicker und stärker als Transportbänder. Im allgemeinen Sprachgebrauch vermischen sich allerdings die beiden Begrifflichkeiten oft. Die vorliegende Erfindung ist somit sowohl für Fördergurte als auch für Transportbänder geeignet, bei denen jeweils Seile zum Einsatz gelangen, die im Wesentlichen aus Stahl aufgebaut sind.

Die qualitative und / oder quantitative Zusammensetzung der Beschichtung, abgesehen von den notwendigen Zusatzstoffen, die für die Aufbringung der Seil-penetrationsfähigen Beschichtung auf und / oder in das Seil und die Ausbildung der Porenstruktur notwendig sind, kann hierbei gleich oder verschieden der Zusammensetzungen der Haftmischung sein. In einer besonders bevorzugten Ausführungsform ist die qualitative und / oder quantitative, insbesondere die qualitative, Zusammensetzung, abgesehen von den obigen Ausnahmen, gleich der Zusammensetzung der Haftmischung. Dadurch wird die Komplexität im Produktionsprozess nur geringfügig erhöht.

Die Beschichtung enthält wenigstens einen Kautschuk. Der Kautschuk für die Beschichtung ist ausgewählt aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR, HNBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Polyurethan (PU) und / oder Epichlorhydrinkautschuk (ECO) und / oder chlorsulfonierter Polyethylenkautschuk (CSM) und / oder Silikonkautschuk (MVQ) und / oder Fluorkautschuk (FPM).

Die genannten Kautschuke können hierbei alleine oder im Verschnitt eingesetzt werden. Des Weiteren kann die Beschichtung wenigstens einen Füllstoff in den üblichen Mengen enthalten. Hierbei können alle der fachkundigen Person bekannten Füllstoffe, wie bspw. Kieselsäure, Ruß, Glimmer, Kohlenstoffnanoröhren, Silikate, Alumiumhydroxid, Talk, Kreide, etc. verwendet werden.

Ebenso können alle der fachkundigen Person bekannten weiteren Zusatzstoffe, wie Vernetzungssysteme, Pigmente, Weichmacher, Ozon- und Alterungsschutzmittel eingesetzt werden.

Diese Porenstruktur ist durch den Einsatz von chemischen Treibmitteln und / oder Mikrokugeln erfolgen, die in die Beschichtung eingemischt sind. Als Treibmittel können sowohl anorganische sowie organische Verbindungen eingesetzt werden. Es handelt sich hierbei üblicherweise um porenbildende Treibgase wie z.B. Azo- und DiazoVerbindungen, die unter dem Einfluß von Wärme oder Katalysatoren Gase (z.B. N2 oder CO2) abspalten und somit die Porenbildung ermöglichen. Die Treibmittel zersetzen sich hierbei bei einer bestimmten Temperatur während der Verarbeitung unter Gas-Bildung oder bei Zusatz von flüchtigen Lösemitteln während der Polymerisation bzw. Vulkanisation. Bei den Mikrokugeln handelt es sich um hohle Kugeln (Mikrosphären) mit einem Durchmesser im µm-Bereich aus Glas, Phenolharz, Kohlenstoff oder thermoplastischem Kunststoffmaterial. Die Mikrokugeln sind in bereits expandierter Form aber auch in expandierbarer Form auf dem Markt erhältlich. Um die gewünschte Volumenzunahme der Beschichtung erzielen zu können, werden im Rahmen der vorliegenden Erfindung bevorzugt expandierbare Mikrokugeln verwendet, die mit einem Treibmittel gefüllt sind und sich beim Erwärmen ausdehnen. Derartige Mikrokugeln werden z. B. unter dem Namen Expancel® von der Firma Akzo Nobel vertrieben.

Zur Bildung einer besonders gut abdichtenden und geschlossenen Porenstruktur werden der Beschichtung vorzugsweise 1 bis 200 Gew.-%, bevorzugt 5 bis 100 Gew.-% und ganz besonders bevorzugt 10 bis 80 Gew.-%, expandierbare Mikrokugeln zugesetzt.

Des Weiteren können in der Beschichtung noch Lösemittel vorhanden sein, die zur Einstellung der Viskosität und damit der Fließfähigkeit der Beschichtung dienen. Als Lösemittel können alle der fachkundigen Person bekannten Lösemittel verwendet werden, bevorzugt handelt es sich allerdings um Toluol, und / oder Benzin und / oder Ester und / oder Ether und / oder Alkane und / oder Terpenderivate. Diese können einzeln oder in Kombination verwendet werden.

Die Viskosität der Beschichtung beträgt bevorzugt 10000 Pa s bei 0,1 D/s bis 0,01 Pa s bei 800 D/s. Besonders bevorzugt beträgt die Viskosität 5000 Pa s bei 0,1 D/s bis 0,01 Pa s bei 800 D/s. Ganz besonders bevorzugt beträgt die Viskosität 0,01 Pa s bei 800 D/s bis 0,1 Pa s bei 800 D/s. Die Viskosität wurde mit Hilfe eines Rotationsviskosimeters der Fa. Physika, Modell Rheolab NC20, Messsystem MK23, gemäß DIN 53 019-1 bestimmt.

Die Beschichtung kann auf das Seil mittels alle der fachkundigen Person bekannten Beschichtungsverfahren aufgebracht werden.

Wie bereits eingangs erwähnt, erfüllt eine Haftmischung im Wesentlichen zwei Funktionen: Sie ermöglicht erstens die Haftung zum Stahlseil und zweitens die Durchgummierung des Seils zwecks Abdichtung.

Das Seil für den Fördergurt ist in der Regel aus mehreren Litzen, welche wiederum aus einzelnen Drähten bestehen, aufgebaut. Die gängigsten Konstruktionen sind 7x7, mit einem Seil aus 7 Litzen, die je aus 7 Drähten bestehen, 1x19+7x7, mit einer Kernlitze aus 19 Einzeldrähten und äußeren Litzen aus je 7 Drähten, und 7x19, mit einem Seil aus 7 Litzen, wobei jede Litze aus 19 Drähten besteht.

Für die Haftung zw. Stahl und Gummi ist im Wesentlichen der Kontakt der Haftmischung mit den äußeren Seiloberflächen verantwortlich.

In einer besonders bevorzugten Ausführungsform der Erfindung ist daher wenigstens die innenliegende Kernlitze mit der expansionsfähigen Beschichtung versehen, was während des Vulkanisationsprozesses zur inneren Abdichtung des Seils führt, ohne die äußere Gummi-Metallhaftung zu stören. Da beim Verdrillen des Seils neue Hohlräume (Seilinneres) entstehen, muss diese Kemlitzenvorbeschichtung zum Hineinströmen in diese Hohlräume befähigt sein, was durch eine entsprechend eingestellte Viskosität der Beschichtungslösung während des Beschichtungsprozesses erzielt wird.

Die expansionsfähige Beschichtung hat nach der Vulkanisation eine geringere Dichte, ggf. mit hohem Gasanteil, und dichtet gleichzeitig ab. Die Beschichtung wird bevorzugt als dünne Schicht auf den Kerndraht appliziert, z.B. durch Tränken, das eventuell vorhandene Lösungsmittel verdampft und anschließend wird das komplette Seil so aufgebaut, dass sich der beschichtete Kerndraht nur im Inneren des Seils befindet.

Wird dieses Seil in ein Transportband konfektioniert und vulkanisiert, so verläuft der Aufheizvorgang in der Presse von außen (elastomere Decklage) nach innen (Seil). Daher wird erst die vorhandene Haftgummierung fließfähig und strömt in die äußeren Seilhohlräume, umschließt diese und bildet im anschließenden Vulkanisationsprozess eine feste Gummi-Metallverbindung aus. Zeitverzögert reagiert nun die expansionsfähige Beschichtung im Seilinneren, sie expandiert, füllt somit die verbleibenden inneren Hohlräume aus, und haftet an den Drahtoberflächen im Inneren des Seils. Hierbei ist es wichtig, dass erst das Aufblähen und dann zeitlich versetzt die Aushärtung, z.B. durch Vulkanisation, erfolgt. Hierdurch entsteht ein inneres Wabensystem aus elastischen Hohlkammern, wodurch Wasser und andere Flüssigkeiten bzw. Kontaminationen nicht mehr im Inneren des Seils wandern können. Somit ist das Seil korrosionsgeschützt. Vorteilhaft ist hierbei, dass die Außenbereiche des so erzeugten Seils frei von der expansionsfähigen Beschichtung sind und die Adhäsion zwischen Seiloberfläche und Haftgummi nicht durch etwaige Porenstrukturen, welche von der expansionsfähigen Beschichtung gebildet werden, reduziert wird.

Es ist aber auch möglich, dass die Oberflächen aller Litzen des Seils, und nicht nur die des Kerndrahtes, mit der expansionsfähigen Beschichtung versehen sind. Hierbei wird mit einer Beschichtung das Seil vollständig abgedichtet und die Haftung zwischen Decklagen und Seil erreicht, so dass im Produktionsprozess lediglich ein Arbeitsschritt für beides ausreichend ist. Insbesondere je mehr Litzen zum Gesamtseil verdrillt werden, desto problematischer ist die vollständige Durchgummierung nach dem bisherigen Stand der Technik, so dass vorteilhafterweise ebenso auch die Kerndrähte der äußeren Litzen des Seils mit der expansionsfähigen Beschichtung versehen sind. Dies ermöglicht die Verwendung von dichten Stahlseilen mit größeren Durchmessern, um noch größere Lasten transportiern zu können, wie sie zunehmend kundenseitig angefordert werden, und eine generelle Lebensdauererhöhung von Fördergurten.

Es können daher nur die zentrale Kernlitze beschichtet sein oder die zentrale Kernlitze und die Kernlitze der Außenlitzen oder das komplette Seil beschichtet sein.

Die Erfindung wird nun anhand von Ausführungsbeispielen unter Bezugnahme auf schematische Zeichnungen erläutert. Es zeigen:

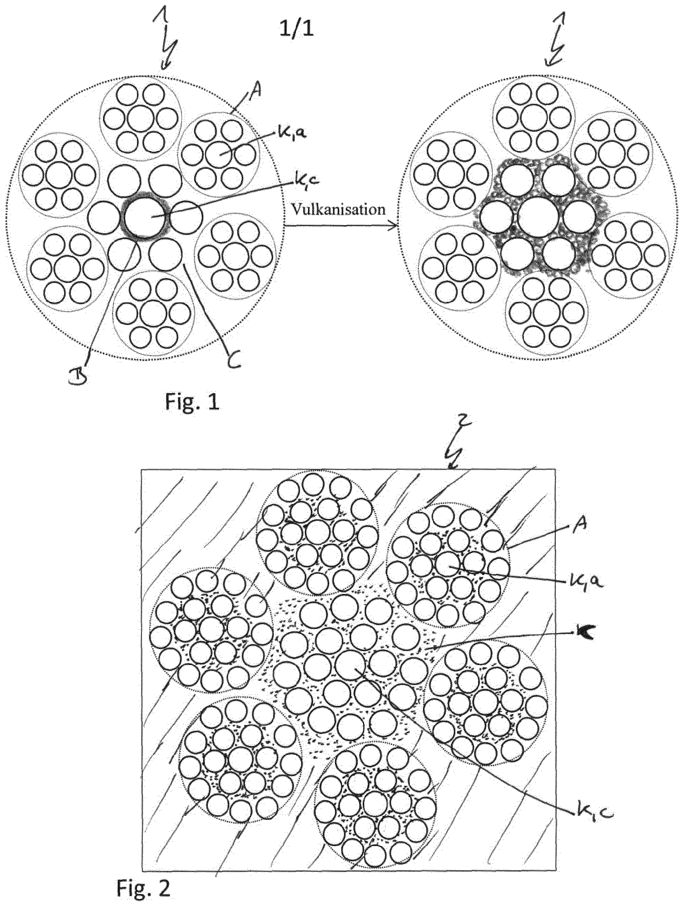

Fig.1 der zentrale Kerndraht K,c wurde mit der expansionsfähigen Beschichtung B behandelt (Fig.1 links). Im nachfolgenden Vulkanisationsprozess nimmt das Volumen der Beschichtung B zu und füllt die Hohlräume in der Kernlitze C aus (Fig. 1-rechts).
Fig.2 7x19 Seilkonstruktion wie sie am Ende des Vulkanisationsprozesses abgedichtet vorliegt. Die schraffierte Fläche stellt hierbei die Bereiche dar, die von der von außen eindringenden Haftmischung gefüllt wurden. Die punktiert dargestellten Bereiche kennzeichnen die expansionsfähige Mischung B nach Volumenzunahme während der Vulkanisation.

### Bezugszeichenliste

### (Teil der Beschreibung)

1, 2 Seil
B = expansionsfähige Beschichtung
A = Außenlitze
K,a = Kerndraht der Außenlitze
C = Kernlitze
K,c = zentraler Kerndraht der Kernlitze

## Patentansprüche

1. Fördergurt mit einer tragseitigen Deckplatte und einer laufseitigen Deckplatte aus jeweils einem polymeren Werkstoff mit elastischen Eigenschaften sowie einem eingebetteten Zugträger in Form von in Fördergurtlängsrichtung parallel verlaufenden Seilen (1, 2), wobei der Zugträger aus Stahl aufgebaut ist, **dadurch gekennzeichnet, dass** der Zugträger vor der Vulkanisation des Fördergurtes vollständig oder teilweise mit einer expansionsfähigen Beschichtung (B) versehen ist, welche nach der Vulkanisation des Fördergurtes eine Porenstruktur aufweist, und dass die Beschichtung (B) wenigstens ein chemisches Treibmittel und / oder Mikrokugeln enthält.

2. Fördergurt nach Anspruch 1, **dadurch gekennzeichnet, dass** das Volumen der Beschichtung (B) nach der Vulkanisation 30 bis 5000% höher ist als vor der Vulkanisation.

3. Fördergurt nach einem der Ansprüche 1 bis 2, **dadurch gekennzeichnet, dass** der Zugträger zu wenigstens 50 Vol. -% aus Stahl aufgebaut ist.

4. Fördergurt nach einem der Ansprüche 1 bis 3, **dadurch gekennzeichnet, dass** die Seile (1, 2) des Zugträgers zentralen Kernlintzen (C) aufweisen, und dass die zentralen Kernlitzen (C) vollständig oder teilweise mit der Beschichtung (B) versehen sind.

5. Fördergurt nach einem der Ansprüche 1 bis 4, **dadurch gekennzeichnet, dass** die Seile (1, 2) des Zugträgers zentralen Kernlitzen (C) und Außenlitzen (A) aufweisen, wobei die Außenlitzen (A) Kernlitzen aufweisen, und dass die zentralen Kernlitzen (C) und die Kernlitzen der Außenlitzen (A) vollständig oder teilweise mit der Beschichtung (B) versehen sind.

## Claims

1. Conveyor belt with an outer sheet on the load-bearing side and with an outer sheet on the drive side, the respective sheet being composed of a polymeric material with resilient properties, and also an embedded tension-member system in the form of cords (1, 2) running parallel in the longitudinal direction of the conveyor belt, wherein the tension-member system is composed of steel, **characterized in that**, prior to vulcanization of the conveyor belt, an expandable coating (B) which, after vulcanization of the conveyor belt, has a pore structure, has been provided to all or parts of the tension-member system, and **in that** the coating (B) comprises at least one chemical blowing agent and/or microbeads.

2. Conveyor belt according to Claim 1, **characterized in that** the volume of the coating (B) after vulcanization is from 30 to 5000% higher than prior to vulcanization.

3. Conveyor belt according to any of Claims 1 to 2, **characterized in that** the tension-member system is composed of at least 50% by volume of steel.

4. Conveyor belt according to any of Claims 1 to 3, **characterized in that** the cords (1, 2) of the tension-member system have central core stands (C), and **in that** the coating (B) has been provided to all or parts of the central core strands (C).

5. Conveyor belt according to any of Claims 1 to 4, **characterized in that** the cords (1, 2) of the tension-member system have central core strands (C) and external strands (A), where the outer strands (A) have core strands, and **in that** the coating (B) has been provided to all or parts of the central core strands (C) and of the core strands of the outer strands (A).

## Revendications

1. Bande de convoyeur avec une plaque de couverture côté support et une plaque de couverture côté roulement respectivement en un matériau polymère avec des propriétés élastiques ainsi qu'avec un élément de traction noyé sous la forme de câbles (1, 2) s'étendant parallèlement dans la direction longitudinale de la bande de convoyeur, dans laquelle l'élément de traction est constitué d'acier, **caractérisée en ce que** l'élément de traction est doté avant la vulcanisation de la bande de convoyeur entièrement ou partiellement d'un revêtement expansible (B), qui présente après la vulcanisation de la bande de convoyeur une structure poreuse, et **en ce que** le revêtement (B) contient au moins un agent porogène chimique et/ou des microbilles.

2. Bande de convoyeur selon la revendication 1, **caractérisée en ce que** le volume du revêtement (B) après la vulcanisation est 30 à 5000 % plus grand qu'avant la vulcanisation.

3. Bande de convoyeur selon une des revendications 1 à 2, **caractérisée en ce que** l'élément de traction est constitué d'acier à raison d'au moins 50 % en volume.

4. Bande de convoyeur selon l'une quelconque des revendications 1 à 3, **caractérisée en ce que** les câbles (1, 2) de l'élément de traction présentent des torons de coeur centraux (C), et **en ce que** les torons de coeur centraux (C) sont entièrement ou partiellement munis du revêtement (B).

5. Bande de convoyeur selon l'une quelconque des revendications 1 à 4, **caractérisée en ce que** les câbles (1, 2) de l'élément de traction présentent des torons de coeur centraux (C) et des torons externes (A), dans laquelle les torons externes (A) présentent des torons de coeur, et **en ce que** les torons de coeur centraux (C) et les torons de coeur des torons externes (A) sont entièrement ou partiellement munis du revêtement (B).
